# EUROPEAN PATENT SPECIFICATION

(11) **EP 1 947 001 B1**
(45) Date of publication and mention of the grant of the patent: **30.12.2009**
(21) Application number: 06811505.4
(22) Date of filing: 10.10.2006
(51) Int. Cl.: B62K 5/00, A61G 5/04, B62J 15/00, B62J 99/00

(54) **SMALL-SIZED VEHICLE**
KLEINES FAHRZEUG
VÉHICULE DE PETITES DIMENSIONS

(30) Priority: 21.10.2005 JP 2005307846
(43) Date of publication of application: 23.07.2008
(73) Proprietor: HONDA MOTOR CO., LTD., Tokyo 107-8556 (JP)
(72) Inventor: MARUYAMA, Shuhei, Wako-shi, Saitama 3510193 (JP); MINATO, Kazuhiro, Wako-shi, Saitama 3510193 (JP); NAGAOKA, Masatoshi, Wako-shi, Saitama 3510193 (JP); ICHIKAWA, Katsuhisa, Wako-shi, Saitama 3510193 (JP)
(74) Representative: Piésold, Alexander James
(86) International application number: PCT/JP2006/320192
(87) International publication number: WO 2007/046266

(56) References cited:
- DE-A1- 4 232 423
- GB-A- 2 385 838
- JP-A- 3 284 479
- JP-A- 2000 237 247
- JP-A- 2000 237 247
- JP-A- 2000 238 678
- JP-A- 2000 238 678
- JP-A- 2003 245 311
- JP-A- 2006 151 026
- JP-Y2- 63 002 384
- US-A- 5 732 788

## Description

### TECHNICAL FIELD

The present invention relates to a small-sized vehicle that can travel on a sidewalk and is suitable for use by elderly people, etc. and, in particular, to an improvement of a small-sized vehicle that includes a body frame, a pair of left and right front wheels turnably suspended on a front part of the body frame, a steering column mounted on the body frame between the front wheels, handlebars steerably supported on the steering column, a steering mechanism coupling the handlebars to the two front wheels, a driver's seat supported on the body frame to the rear of the steering column, and a vehicle body cover supported on the body frame so as to cover at least the area around the steering column.

### BACKGROUND ART

Such a small-sized vehicle is already known as disclosed in, for example, Patent Publication 1. Patent Publication 1: Japanese Patent Application Laid-open No. 9-315343

### DISCLOSURE OF INVENTION

### PROBLEMS TO BE SOLVED BY THE INVENTION

Such a small-sized vehicle mainly travels on a sidewalk, and when there is a need for riding over a large step, a gutter, etc., it might be necessary for two or three assistants to lift up the vehicle body and move it. Because of this, in a conventional arrangement, a lifting part, in particular for a vehicle body front part, is formed in a lower part of the front end of a vehicle body frame, but such a lifting part is difficult for an assistant to grip, and since it is easily soiled by mud splashed during travel, the hands of an assistant gripping it might become dirty, and the burden on the assistant is high.

The present invention has been accomplished in the light of such points, and it is an object thereof to provide a small-sized vehicle of the above type that can alleviate the burden on an assistant when lifting up a front part of the vehicle body.
JP 2000237247 discloses a small size vehicle according to the preamble of claim 1.

### MEANS FOR SOLVING THE PROBLEMS

In order to attain the above object, according to a first aspect of the present invention, there is provided a small-sized vehicle comprising a body frame, a pair of left and right front wheels turnably suspended on a front part of the body frame, a steering column mounted on the body frame between the front wheels, handlebars steerably supported on the steering column, a steering mechanism coupling the handlebar to the two front wheels, a driver's seat supported on the body frame to the rear of the steering column, and a vehicle body cover supported on the body frame so as to cover at least the area around the steering column, characterized in that a guard member, having a grip portion for lifting a vehicle body at a position above each front wheel, is disposed between the vehicle body cover and each front wheel.

According to a second aspect of the present invention, in addition to the first aspect, a movable fender is disposed beneath the grip portion of the guard member, the movable fender covering an upper part of the outer peripheral face of the front wheel and being capable of turning integrally with the front wheel.

According to a third aspect of the present invention, in addition to the second aspect, the movable fender corresponding to each front wheels is mounted on a knuckle that turnably supports the front wheel and that is connected to a forward end part of a tie rod of the steering mechanism.

According to a fourth aspect of the present invention, in addition to any one of the first to third aspects, the guard member is formed from the grip portion and a pair of leg portions extending from opposite ends of the grip portion, forward end parts of the leg portions being secured to the body frame.

The vehicle body cover corresponds to a front side cover 90, a front cover 91, etc. of an embodiment of the present invention, which is described later.

### EFFECTS OF THE INVENTION

In accordance with the first aspect of the present invention, it is possible by means of the guard member to prevent an obstruction from entering between the vehicle body cover and the front wheel. Moreover, since the grip portion of the-guard member is exposed above the front wheel, when an assistant lifts up the vehicle body front part, it is easy to grip the grip portion, thus improving lifting workability and alleviating the burden on the assistant.

In accordance with the second aspect of the present invention, since the grip portion of the guard member is disposed above the movable fender, muddy water splashed by the front wheel can be caught by the movable fender, thus preventing the grip portion from becoming dirty with muddy water, the hands of the assistant therefore do not become dirty, and the burden on the assistant is further alleviated. Furthermore, employing the movable fender enables the wheel cover around the steering column to be formed with a small width so that this is housed between the left and right front wheels, and it is possible to reduce intimidation of a pedestrian while traveling on a sidewalk.

In accordance with the third aspect of the present invention, mounting the movable fender on the knuckle enables the movable fender to be reliably turned integrally with the front wheel, thus always suppressing effectively splashing of mud from the front-wheel.

In accordance with the fourth aspect of the present invention, securing the two leg portions of the guard member to the body frame enables the strength with which the guard member is supported to be enhanced, thus enabling the lifting load to be sufficiently withstood.

### BRIEF DESCRIPTION OF DRAWINGS

[FIG 1] FIG 1 is a perspective view of a small-sized vehicle related to an embodiment of the present invention (first embodiment).
[FIG 2] FIG 2 is a front view-of the small-sized vehicle (first embodiment).
[FIG 3] FIG 3 is a side view of the small-sized vehicle (first embodiment).
[FIG 4] FIG 4 is a side view showing a body frame of the small-sized vehicle (first embodiment).
[FIG. 5] FIG 5 is a plan view showing the body frame (first embodiment).
[FIG 6] FIG 6 is a sectional view along line 6-6 in FIG 3 (first embodiment).
[FIG. 7] FIG. 7 is a sectional view along line 7-7 in FIG 6 (first embodiment).
[FIG. 8] FIG 8 is an outside view of a movable fender (first embodiment).
[FIG 9] FIG 9 is a sectional view along line 9-9 in FIG. 6 (first embodiment).
[FIG. 10] FIG 10 is a sectional view along line 10-10 in FIG. 7 (first embodiment).
[FIG. 11] FIG. 11 is a sectional view along line 11-11 in FIG. 10 (first embodiment).
[FIG. 12] FIG. 12 is a sectional view along line 12-12 in FIG. 3 (first embodiment).
[FIG 13] FIG. 13 is a sectional view along line 13-13 in FIG.* 12 (first embodiment).
[FIG 14] FIG 14 is a sectional view along line 14-14 in FIG. 12 (first embodiment).

### EXPLANATION OF REFERENCE NUMERALS AND SYMBOLS

- V: Small-sized vehicle
- 1: Body frame
- 2f: Front wheel
- 3: Handlebars
- 4: Steering mechanism
- 6: Driver's seat
- 26: Knuckle
- 28: Steering column
- 31: Tie rod
- 32: Guard member
- 32a, 32b: Leg portion
- 32g: Grip portion
- 35: Movable fender
- 90: Vehicle body cover (front side cover)
- 91: Vehicle body cover (front cover)

### BEST MODE FOR CARRYING OUT THE INVENTION

A mode for carrying out the present invention is explained below by reference to a preferred embodiment of the present invention shown in the drawings.

### EMBODIMENT 1

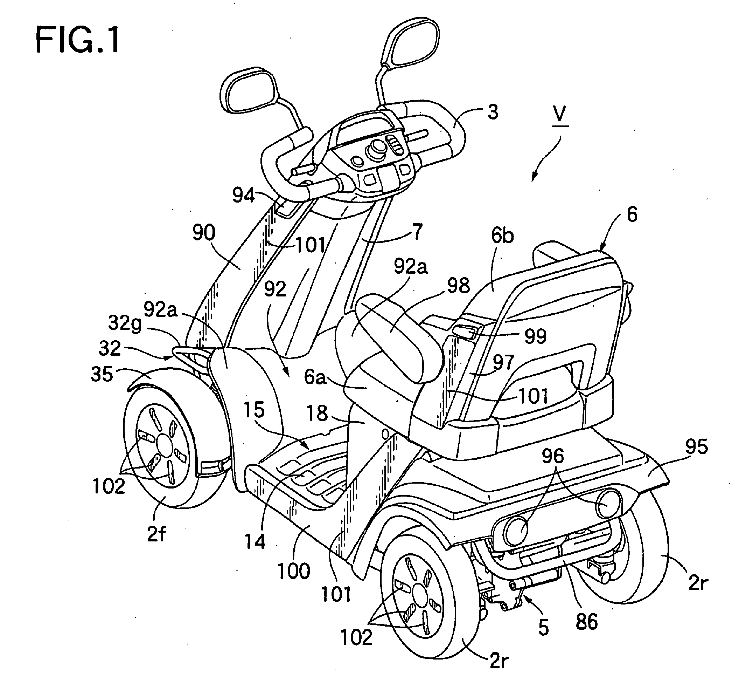

Referring to FIG 1 to FIG. 5, a small-sized vehicle V includes a body frame 1, a pair of left and right front wheels 2f and 2f turnably suspended on a front end part of the body frame 1, handlebars 3, a steering mechanism 4 for transmitting movement of the handlebars 3 to the two front wheels 2f and 2f, a power unit 5 suspended on a rear end part of the body frame 1, a pair of left and right rear wheels 2r and 2r supported on the power unit 5 and driven together, a driver's seat 6, and a vehicle body cover such as a leg shield 7, detailed explanation thereof being given below in sequence. In the explanation below, left and right, and front and rear are relative to the small-sized vehicle V

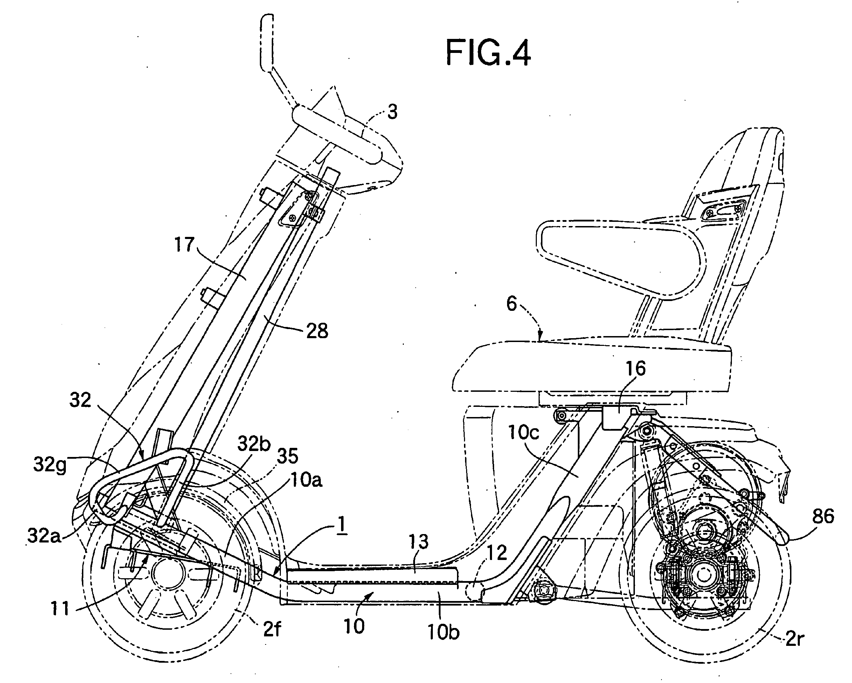

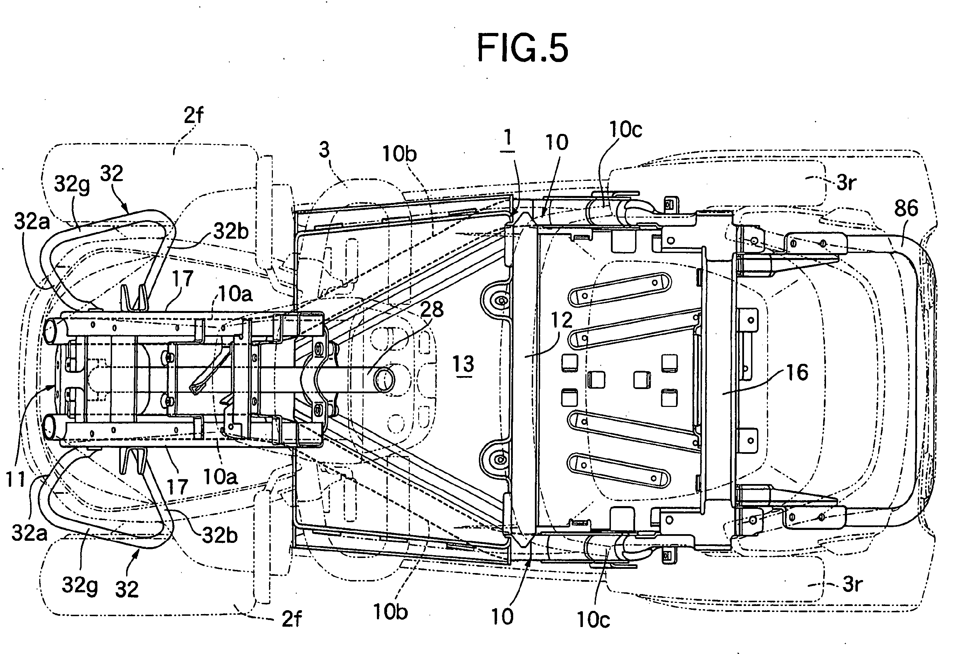

First, the body frame 1 has, as shown in FIG 4 and FIG. 5, a pair of pipe-shaped main frames 10 and 10 disposed so as to be laterally separated from each other. Each main frame 10 is formed from a frame front portion 10a extending while being inclined downward from the front end to the rear, a frame intermediate portion 10b horizontally extending from the rear end of the frame front portion 10a to the rear, and a frame rear portion 10c extending while being inclined upward to the rear from the rear end of the frame intermediate portion 10b; the frame front portions 10a and 10a of the two main frames 10 and 10 are disposed parallel to each other, the frame intermediate portions 10b and 10b are disposed so that the gap therebetween widens toward the rear, and the frame rear portions 10c and 10c are disposed parallel to each other. A sub-frame 11, which is made of a steel sheet, is welded to the frame front portions 10a and 10a so as to provide a connection therebetween, a pipe-shaped cross member 12 is welded to the rear ends of the frame intermediate portions 10b and 10b so as to provide a connection therebetween, and a rectangular floor panel 13 is welded to upper parts of the frame intermediate portions 10b and 10b so as to provide a connection therebetween. A seat rail 16 is welded to upper ends of the frame rear portions 10c and 10c so as to provide a connection therebetween. Furthermore, lower end parts of a pair of left and right support posts 17 and 17 inclined slightly rearward are welded to front end parts of the frame front portions 10a and 10a. The body frame 1 is arranged as above.

A driver's seat 6 is mounted on the seat rail 16. Furthermore, an auxiliary equipment housing box 18 housing auxiliary equipment such as a battery 19 is mounted from the front side between the frame rear portions 10c and 10c.

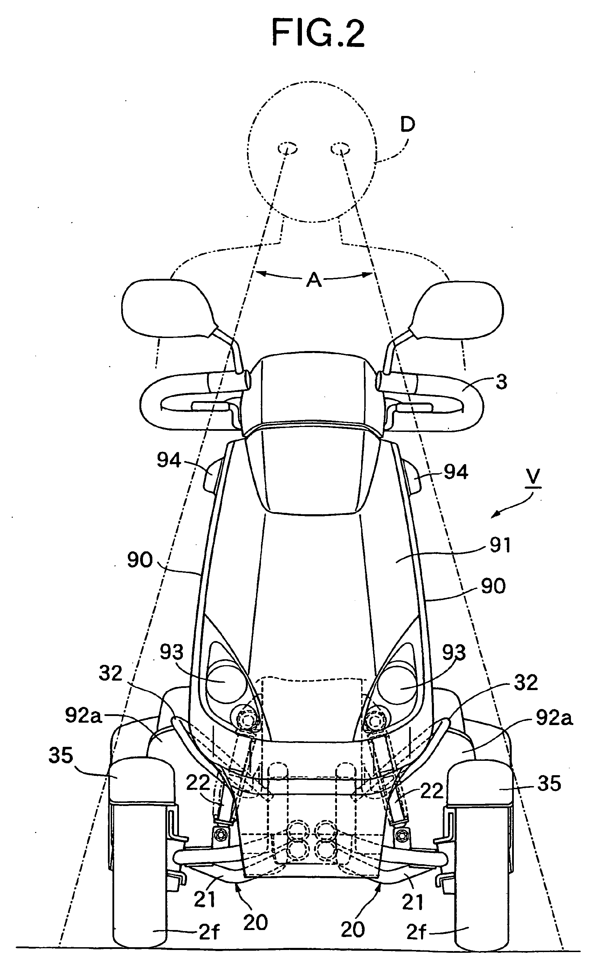

As shown in FIG 2, FIG. 3, and FIG. 6, the left and right front wheels 2f and 2f are independently suspended on the sub-frame 11 via front suspension systems 20 and 20 respectively. Each front suspension system 20 includes an A-shaped front suspension arm 21 having its inner end side bifurcated into front and rear parts and a telescopic front damper 22. A pair of front and rear boss portions 21a and 21a at the inner end of the front suspension arm 21 are supported via resilient bushes 24 and 24 on a pair of front and rear pivot shafts 23 and 23 fixedly provided on the sub-frame 11 and extending in the fore-and-aft direction so that the front suspension arm 21 can swing vertically around the pivot shafts 23 and 23, and the front damper 22 for cushioning vertical swinging of the front suspension arm 21 is connected between each front suspension arm 21 and the support post 17 on the same side.

Connected turnably via a kingpin 27 to the outer end of the front suspension arm 21, that is, the swinging end, is a knuckle 26 having an axle 25 rotatably supporting the front wheel 2f on the same side.

A steering column 28 supported by the sub-frame 11 and the left and right support posts 17 and 17 is disposed in an intermediate section between the two support posts 17 and 17, and the handlebars 3, which are disposed above the steering column 28, are operatively connected to the left and right knuckles 26 and 26 via the steering mechanism 4.

The steering mechanism 4 is formed from a steering shaft 29 rotatably supported on the handlebars 3 and having its upper end part connected to the handlebars 3, a steering arm 30 formed integrally with a lower end part of the steering shaft 29 and extending to the rear of the shaft 29, and a pair of left and right tie rods 31 and 31 providing a connection between the steering arm 30 and knuckle arms 26a and 26a of the left and right knuckles 26 and 26. The knuckle arm 26a extends from a lower end part of the knuckle 26 further rearward than the kingpin 27, pivots around the kingpin 27 in response to steering of the handlebars 3, and makes the left and right front wheels 2f and 2f turn.

As shown in FIG. 1, FIG. 2, FIG. 6, and FIG 7, a movable fender 35 covering substantially half of a peripheral face of an upper part of the front wheel 2f is disposed above each front wheel 2f, and this movable fender 35 is mounted on the corresponding knuckle 26 as follows, so that it can be turned integrally with the corresponding front wheel 2f. That is, the movable fender 35 is made of a synthetic resin, and is formed by integrally connecting an arc-shaped peripheral wall portion 35a covering an upper part of the outer peripheral face of the front wheel 2f, an inside wall portion 35b covering an upper part of the inside face of the front wheel 2f, and an outside wall portion 35c covering the edge of an upper part of the outside face of the front wheel 2f; a vertical first mounting portion 36 is formed in an intermediate section of the inside wall portion 35b, and a horizontal second mounting portion 37 is formed in a rear end section thereof. A pair of front and rear brackets 38 and 38 are formed on the knuckle 26 so as to rise from the upper end thereof, the first mounting portion 36 is secured to these brackets 38 and 38 via bolts 39 and 39, and the second mounting portion 37 is secured to the knuckle arm 26a via a bolt 40. Removing the bolts 39 and 40 enables the movable fender 35 to be detached from the knuckle 26.

With regard to the left and right movable fenders 35 and 35, at least front end parts thereof are disposed so as to be within a field of vision A of a driver D seated on the seat 6 (see FIG. 2).

The driver D can therefore appropriately check the position and direction of the front wheels 2f and 2f on the road by viewing the movable fenders 35 and 35, which turn together with the left and right front wheels 2f and 2f, while driving the small-sized vehicle V, and thereby can easily carry out steering on a bad road or a tight bend.

Moreover, in the case of the movable fenders 35 and 35 a relatively small area suffices for covering just the area immediately above the front wheels 2f and 2f, and compared with one that is formed so as to cover a wide area of a turning front wheel, such as a fixed front fender of a conventional small-sized vehicle, which is integral with a vehicle body, it can contribute to a reduction in the width of the vehicle body, and avoid intimidating a pedestrian while traveling on a sidewalk.

Furthermore, mounting of each movable fender 35 can be carried out simply by bolting the first and second mounting portions 37 of the inside wall portion 35b to the brackets 38 and 38 and knuckle arm 26a of the knuckle 26, which axially supports the front wheel 2f, and the movable fenders 35 and 35 can reliably be turned simultaneously with the front wheels 2f and 2f.

Moreover, since each moveable fender 35 can be independently detached from the knuckle 26, if it is damaged, only the movable fender 35 needs to be replaced with a new component irrespective of other members, thus reducing the cost of maintenance.

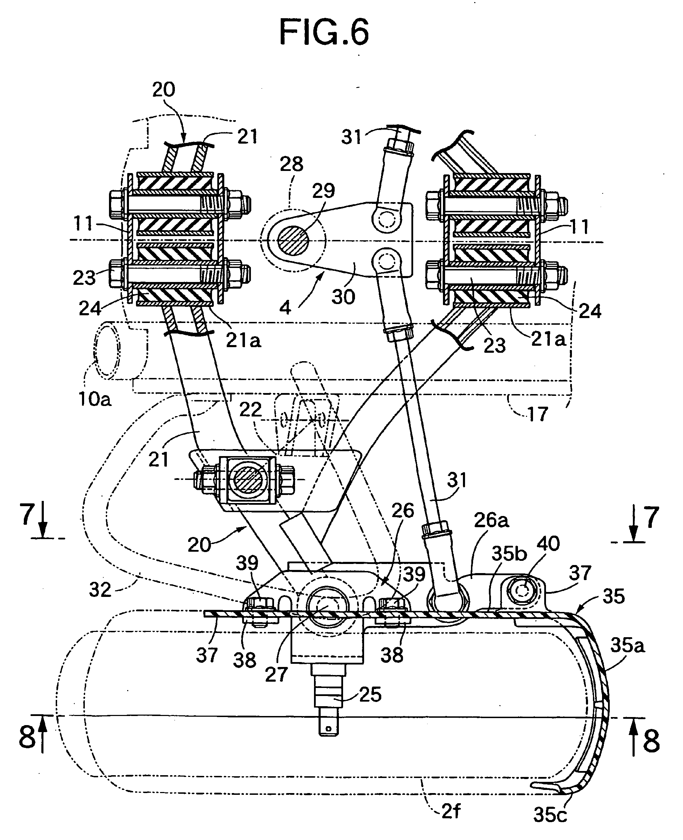

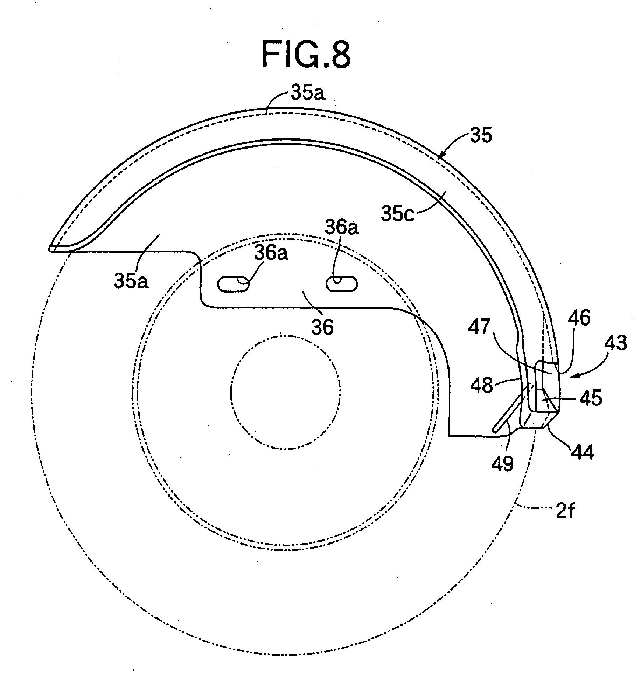

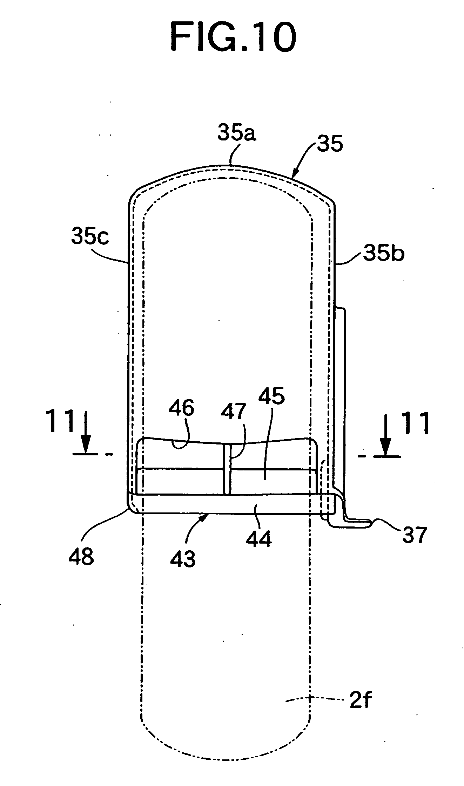

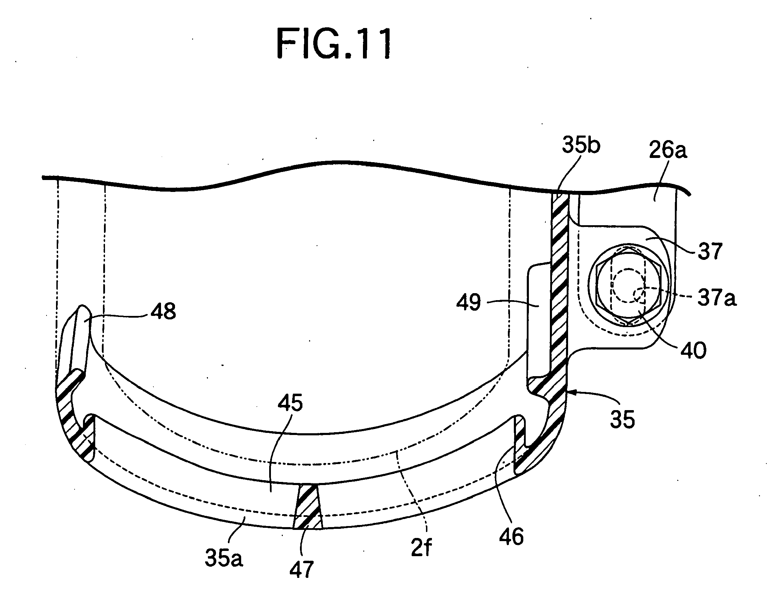

As shown in FIGS 6 to FIG. 11, in each movable fender 35, mud scraping means 43 for scraping off mud attached to the front wheel 2f is provided in a rear end part of the peripheral wall portion 35a thereof. This mud scraping means 43 is formed across the whole width at the lower end of the movable fender 35, that is, it is formed from a first soil removing piece 44 formed longer than the width of the front wheel 2f and a second soil removing piece 45 formed at the lower edge of a slit 46 opening across the whole width of the peripheral wall portion 35a directly above the first soil removing piece 44, and the second soil removing piece 45 is also formed longer than the width of the front wheel 2f. The first soil removing piece 44 has its extremity inclined downward relative to the outer peripheral face of the front wheel 2f and scrapes off mud attached to the outer peripheral face thereof when the front wheel 2f turns forward, and the second soil removing piece 45 has its extremity inclined upward relative to the outer peripheral face of the front wheel 2f and scrapes off mud attached to the outer peripheral face thereof and discharges it outside the slit 46 when the front wheel 2f turns backward. In particular, since the extremity of the first soil removing piece 44 projects obliquely downward relative to the outer peripheral face of the front wheel 2f, and the extremity of the second soil removing piece 45 projects obliquely upward relative to the outer peripheral face of the front wheel 2f, when the front wheel 2f turns forward and turns backward, the first and second soil removing pieces 44 and 45 tend to dig into the mud on the outer peripheral face of the front wheel 2f, thus smoothly scooping up the mud and thereby contributing to an improvement of an effect of scraping off mud.

The slit 46 is provided with a laterally thin reinforcing wall 47 providing a connection between upper and lower edge portions of a laterally intermediate section of the slit 46. This reinforcing wall 47 plays a role in reinforcing the periphery of the slit 46 and the first and second soil removing pieces 44 and 45. The reinforcing wall 47 is disposed so as to be closer to the outer peripheral face of the front wheel 2f than the two soil removing pieces 44 and 45, and when the rear end part of the movable fender 35 resiliently deforms so as to come into the proximity of the front wheel 2f, the reinforcing wall 47 abuts against the outer peripheral face of the front wheel 2f, thereby preventing the two soil removing pieces 44 and 45 from contacting the front wheel 2f. Therefore, when mud of the front wheel 2f is scraped off by the first soil removing piece 44 or the second soil removing piece 45, even if the first soil removing piece 44 or the second soil removing piece 45 digs into the mud, since the reinforcing wall 47 abuts against the outer peripheral face of the front wheel 2f, it is possible to prevent the soil removing pieces 44 and 45 from digging in excessively.

As shown in FIG. 6, FIG. 8, and FIG. 10, a third soil removing piece 48 in the proximity of the outer side face of the front wheel 2f is formed on a rear end part of the outside wall portion 35c of each movable fender 35. This third soil removing piece 48 has its lower end joined to the extremity of the first soil removing piece 44, and scrapes off mud attached to the outer peripheral face of the front wheel 2f when it turns forward.

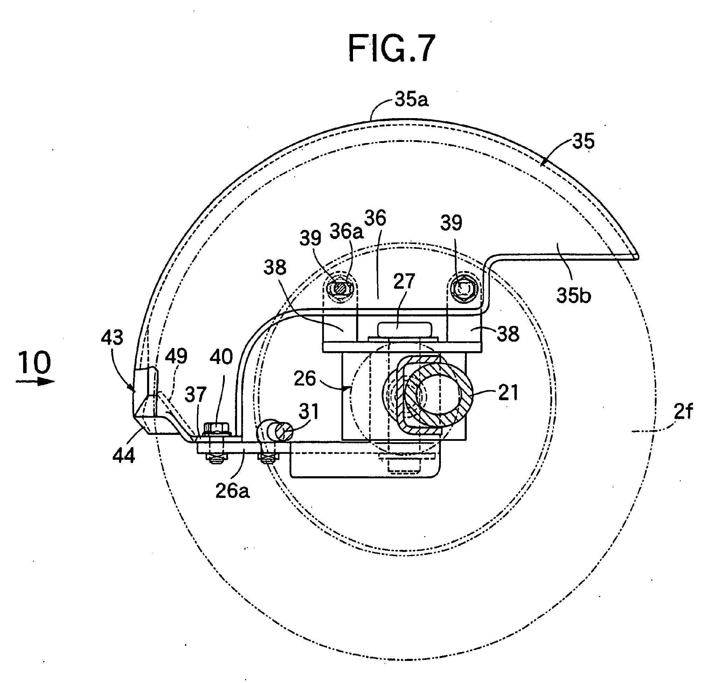

Furthermore, as shown in FIG 7, FIG. 10, and FIG. 11, a soil removing piece 49 is formed integrally with an inner face of the inside wall portion 35b of the movable fender 35, the soil removing piece 49 projecting toward an inside face of the front wheel 2f while being inclined downward to the front so as to make its lower end closer to the lower edge of the inside wall portion 35b, and this soil removing piece 49 scrapes off toward the rear mud attached to the side face of the front wheel 2f, particularly when it rotates forward.

Scraping off mud attached to the front wheel 2f as described above enables mud to be prevented from clogging the gap between each front wheel 2f and the movable fender 35, thus ensuring that each front wheel 2f rotates smoothly; it is therefore possible to smoothly travel in a muddy place and, moreover, the driver D views the state in which mud is scraped off from the front wheels 2f and 2f while-driving, thus comprehending the muddy state of the road surface.

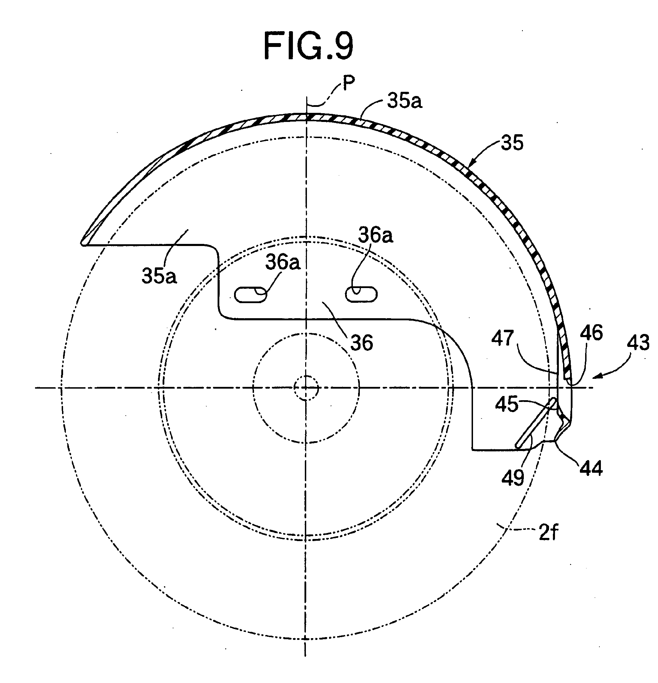

The structure for mounting the movable fender 35 on the knuckle 26 is now explained in further detail. A pair of front and rear first mounting holes 36a and 36a are disposed in the vertical first mounting portion 36 formed on the inside wall portion 35b of the movable fender 35 so as to sandwich a vertical plane P (see FIG. 9) containing the axis of rotation of the front wheel 2f, and a second mounting hole 37a is provided in the horizontal second mounting portion 37, which is formed on a lower end part of the inside wall portion 35b, so as to be in the proximity of the mud scraping means 43. These first and second mounting holes 36a and 37a are long holes that are long in the fore-and-aft direction. The first mounting portion 36 is secured to the pair of front and rear brackets 38 and 38 of the upper part of the knuckle 26 via the bolts 39 and 39 inserted through the first mounting holes 36a and 36a. The first mounting portion 36 is also secured to a rear end part of the knuckle arm 26a via the bolt 40 inserted through the second mounting hole 37a. When carrying out these securing procedures, moving the movable fender 35 back and forth along the direction of the major axis of the first and second mounting holes 36a and 37a adjusts the gap between the front wheel 2f and, in particular, the reinforcing wall 47, the first soil removing piece 44, and the second soil removing piece 45 at an appropriate gap that is effective for scraping off mud.

Since the movable fender 35 is supported on the knuckle 26 by the second mounting portion 37 in the proximity of the mud scraping means 43 as described above, when mud on the front wheel 2f is scraped off by the mud scraping means 43, the load imposed on the movable fender 35 is directly transmitted to and supported by the knuckle 26, thus preventing as far as possible the movable fender 35 from deforming.

Furthermore, since the first mounting portion 36 of the movable fender 35 is supported on the knuckle 26 at two positions in the fore-and-aft direction arranged so as to sandwich the vertical plane P containing the axis of rotation of the front wheel 2f, together with support via the second mounting portion 37, the entire movable fender 35 can be supported securely on the knuckle 26. Moreover, since the first and second mounting portions 36a and 37a form right angles to each other, the rigidity with which the movable fender 35 is supported is high, thus contributing to stabilization of the mounting attitude of the movable fender 35 and prevention of vibration.

In FIG. 1 and FIG. 4 to FIG. 6, a pair of left and right guard members 32 and 32 are disposed on left and right sides of a front part of the body frame 1 so as to protrude to above the front wheels 2f and 2f on the same side while surrounding the front damper 22 on the same side. Each guard member 32 is formed by bending a pipe material in a loop shape, is formed in a loop shape from a linear grip portion 32g extending in the fore-and-aft direction and a pair of front and rear leg portions 32a and 32b extending from opposite ends of the grip portion 32g while bending downward, and is supported on the body frame 1 by securing the leg portion 32b on the rear side to an outside face of the frame front portion 10a of the main frame 10 and securing the leg portion 32a on the front side to an outside face of the support post 17 on the same side via a bolt, etc. The two leg portions 32a and 32b are disposed so that their outer ends are inclined upward while passing front and rear opposite sides of the front damper 22 and passing between the front wheel 2f and a front cover 91, a front side cover 90, and the leg shield 7, and the grip portion 32g occupies a position above the front wheel 2f and the movable fender 35.

The left and right guard members 32 and 32 can prevent an obstruction such as a dropped object from entering between the front cover 91 and the front wheels 2f and 2f, and protect the movable fender 35, the front wheel 2f, the front damper 22, etc. from the obstruction.

Since the grip portion 32g of each guard member 32 is exposed above the movable fender 35, when an assistant lifts a front part of the small-sized vehicle V, the grip portion 32g can easily be held without being obstructed by the front cover 91, etc., and the lifting operability is improved. Furthermore, since the grip portion 32g is disposed above the movable fender 35, muddy water scattered by the front wheel 2f is caught by the movable fender 35, thus preventing the grip portion 32g from becoming dirty due to muddy water and, therefore, the assistant's hands do not become dirty. In this way, the burden imposed on the assistant when lifting the front part of the small-sized vehicle V can be alleviated.

Moreover, since the two leg portions 32a and 32b of the guard member 32 are secured to the body frame 1, the strength with which the guard member 32 is supported is high, and it can sufficiently withstand the lifting load.

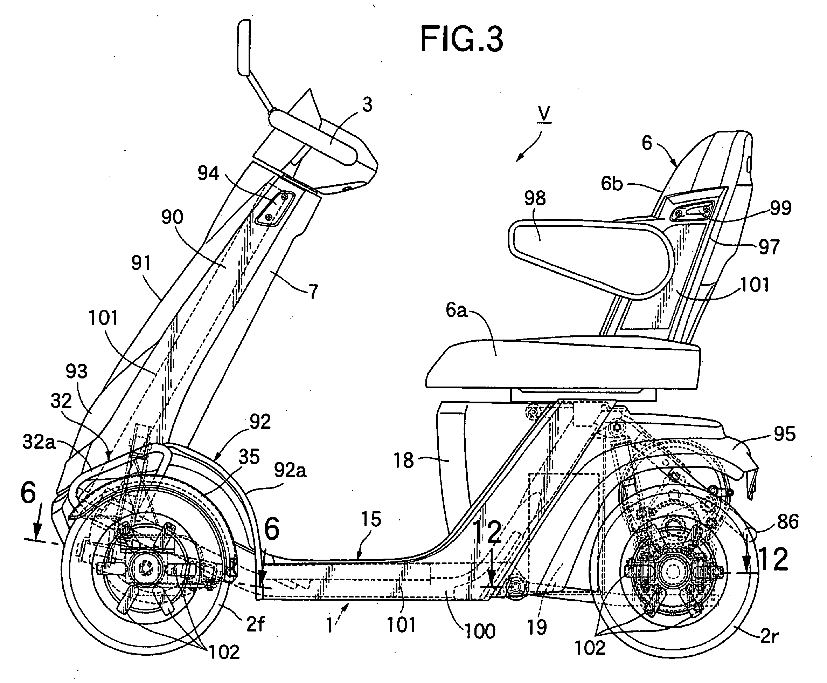

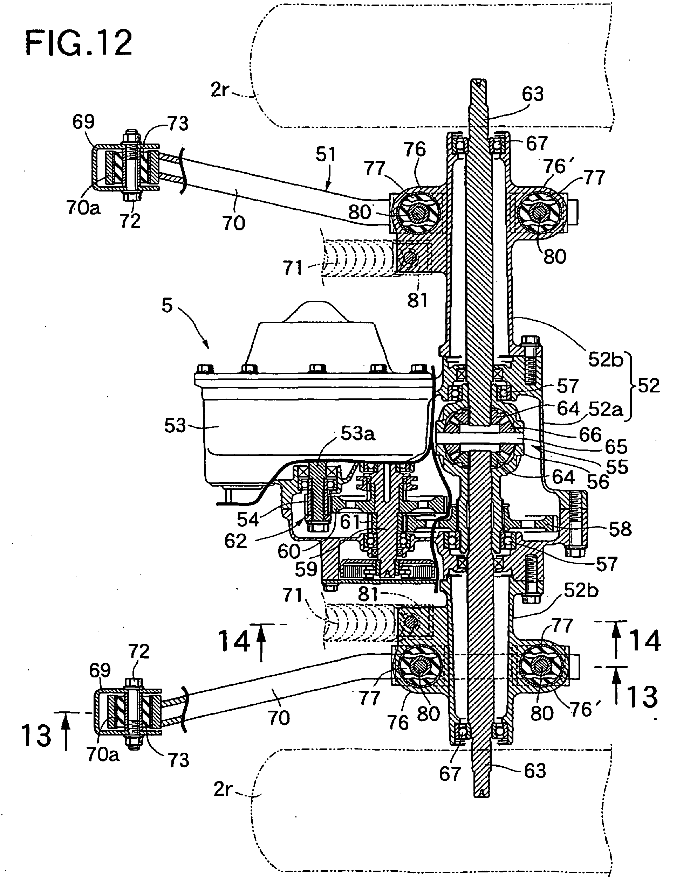

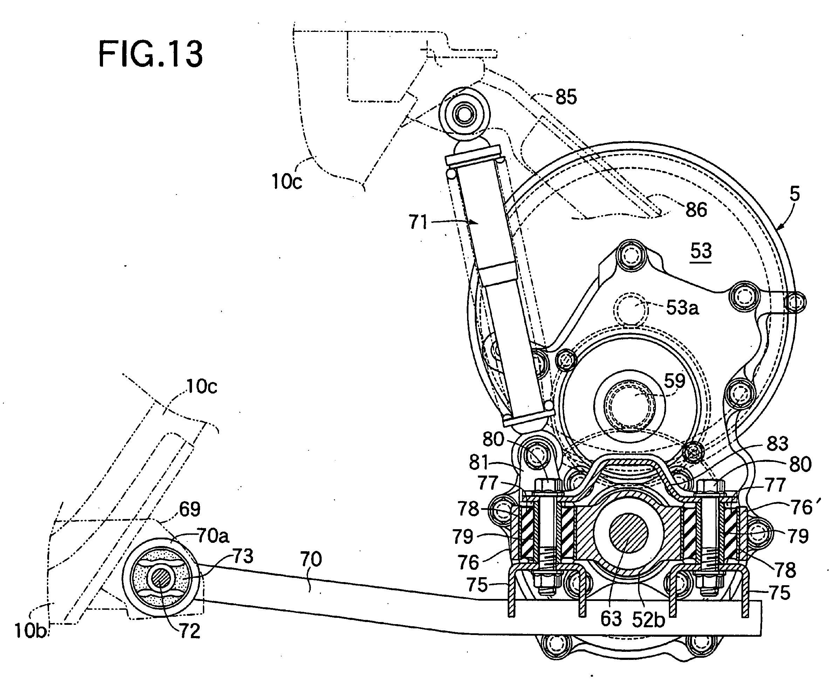

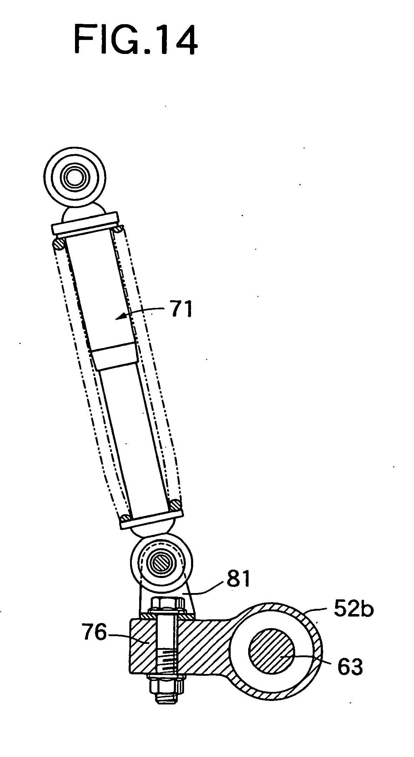

In FIG. 3 and FIG. 12 to FIG. 14, the power unit 5 is suspended on a rear part of the main frame 10 via a rear suspension system 51, and the pair of left and right rear wheels 2r and 2r are supported on the power unit 5. A casing 52 of the power unit 5 is formed from a reduction case 52a and a pair of left and right axle cases 52b and 52b projectingly provided integrally with left and right opposite side walls of a lower part of the reduction case 52a, an electric motor 53, which uses the battery 19 as a power source, is mounted on one side of an upper part of the reduction case 52a, and an output shaft 53a of the electric motor 53 is disposed so that a pinion gear 54 formed on a forward end part thereof projects into the reduction case 52a.

Within the reduction case 52a, a differential case 56 of a differential 55 is disposed coaxially with the left and right axle cases 52b and 52b, and left and right opposite end parts of the differential case 56 are rotatably supported on the reduction case 52a via ball bearings 57 and 57. A large-diameter final gear 58 is spline-coupled to the differential case 56. Within the reduction case 52a, an intermediate transmission shaft 59 is disposed in an intermediate section between the output shaft 53a and the axle cases 52b and 52b, and left and right opposite end parts of the intermediate transmission shaft 59 are rotatably supported on the reduction case 52a. A large-diameter gear 60 meshing with the pinion gear 54 and a small-diameter gear 61 meshing with the final gear 58 are fixedly provided on the intermediate transmission shaft 59. The pinion gear 54, the large-diameter gear 60, the small-diameter gear 61, and the final gear 58 form a reduction gear 62 for transmitting rotation of the output shaft 53a of the electric motor 53 to the differential case 56 with a fixed reduction ratio.

Left and right rear axles 63 and 63 running through the left and right axle cases 52b and 52b are each relatively rotatably supported by the inner peripheral face of opposite end parts of the differential case 56, and side gears 64 and 64 are respectively spline-coupled to inner end parts, of the rear axles 63 and 63, projecting into the differential case 56. A pinion shaft 65, which is perpendicular to the axis of rotation of the differential case 56, is mounted thereon, and a pair of pinion gears 66 and 66, which mesh with the two side gears 64 and 64, are rotatably supported on the pinion shaft 65. The differential case 56, the pinion gears 66 and 66, and the side gears 64 and 64 form the differential 55 for distributing rotation of the final gear 58 between the left and right rear axles 63 and 63.

The left and right rear axles 63 and 63 are supported on outer end parts of the left and right axle cases 52b and 52b via ball bearings 67 and 67. The left and right rear wheels 2r and 2r are mounted integrally onto forward end parts of the left and right rear axles 63 and 63 projecting from the outer ends of the left and right axle cases 52b and 52b. The rear wheels 2r and 2r are therefore supported on the axle cases 52b and 52b via the rear axles 63 and 63.

The rear suspension system 51 is formed from a pair of left and right rear suspension arms 70 and 70 and a pair of left and right telescopic rear dampers 71 and 71. Each rear suspension arm 70 has a boss portion 70a at its front end supported via a front resilient bush 73 on a pivot shaft 72 that is secured to a bracket 69 in a rear end part of the frame intermediate portion 10b and extends laterally, so that the rear suspension arm 70 can swing vertically around the pivot shaft 72.

A pair of front and back support platforms 75 and 75 are fixed by welding to a rear end part of each rear suspension arm 70, and a pair of front and rear support arms 76 and 76' disposed above the support platforms 75 and 75 are projectingly provided integrally with front and rear opposite faces of the axle case 52b on the same side. Rear resilient bushes 77 and 77 having their axes directed vertically-are provided on the support arms 76 and 76' as follows.

That is, an outer tube 78 and an inner tube 79, which are coaxial with each other, are fused to inner and outer peripheries of each rear resilient bush 77, and the outer tubes 78 and 78 of the front and back rear resilient bushes 77 and 77 are press-fitted into the support arms 76 and 76'. The inner tubes 79 and 79 of the front and back rear resilient bushes 77 and 77 are held and fixed between the support platforms 75 and 75 and a retaining plate 83 via bolts 80 and 80 running through the inner tubes 79 and 79.

In the arrangement above, each front resilient bush 73 is formed so that the modulus of elasticity in the vertical direction is smaller than the modulus of elasticity in the fore-and-aft direction. Each rear resilient bush 77 is formed so that the modulus of elasticity in the lateral direction is smaller than the modulus of elasticity in the fore-and-aft direction.

An upwardly rising bracket 81 is secured to each support arm 76 on the front side, and opposite end parts of the rear damper 71 are connected to the bracket 81 and an upper end part of the frame rear portion 10c.

When the rear wheels 2r and 2r are driven by output from the power unit 5, a reaction torque acting on the casing 52 is transmitted from the support arms 76 and 76' of the axle case 52b to the rear suspension arm 70 via the pair of front and back rear resilient bushes 77 and 77, the bolts 80 and 80, and the support platforms 75 and 75, and is received by the rear suspension arm 70. In this process, due to resilient deformation of the front and back rear resilient bushes 77 and 77, the impact of the reaction torque is appropriately alleviated; since the rear resilient bushes 77 and 77 are disposed in the fore-and-aft direction with the rear axle 63 interposed therebetween, a sufficient resistance force can be exhibited against the reaction torque, and by setting the modulus of elasticity in the fore-and-aft direction of these rear resilient bushes 77 at a relatively large value, the rigidity with which the power unit 5 is supported can be enhanced. It is therefore possible to suppress excessive swinging of the overall power unit 5 due to the reaction torque and to appropriately transmit power to the rear wheels 2r and 2r.

Furthermore, the pair of rear dampers 71 and 71 connected to the left and right support arms 76 and 76 on the front side of the axle cases 52b and 52b also function so as to oppose the reaction torque of the power unit 5, thus contributing to strengthening of the rigidity with which the power unit 5 is supported.

While the small-sized vehicle V is traveling, when different impacts are applied to the left and right rear wheels 2r and 2r from the road surface, due to resilient deformation of the front resilient bush 73 and the rear resilient bushes 77 and 77, the axle cases 52b and 52b are relatively easily tilted so that the side on which the impact from the road surface is higher is directed upward and, in response thereto, vertically swinging the left and right rear suspension arms 70 and 70 relative to each other enables the left and right rear wheels 2r and 2r to be individually raised up and down, thereby enhancing the road holding of each rear wheel 2r and contributing to an improvement in the ride comfort. In particular, setting the modulus of elasticity in the lateral direction of each rear resilient bush 77 so as to be relatively small is effective in promoting swinging of the left and right rear suspension arms 70 and 70 relative to each other and further improving the road holding of each rear wheel 2r.

Moreover, when cornering, if the rear wheels 2r and 2r receive a lateral load, a sufficient resistance force can be exhibited by cooperation between the front and back pairs of left and right rear resilient bushes 77 and 77: 77 and 77, and it is therefore possible to enhance the rigidity with which the rear wheels 2r and 2r are supported in the lateral direction and to stabilize the attitude of the rear wheels 2r and 2r.

Such a rear suspension system 51 has a simple structure and is easy to assemble, and it can be provided at low cost.

In FIG. 1 and FIG. 3 to FIG. 5, a pair of left and right fourth brackets 85 and 85 projecting obliquely downward are welded to an upper end part of the frame rear portion 10c, and opposite end parts of a U-shaped rear bumper 71 are secured to these fourth brackets 85 and 85 via bolts 87 so as to surround the electric motor 53 of the power unit 5. This rear bumper 71 exhibits a function of preventing the electric motor 53 from being damaged by a rear obstruction as well as a function of serving as a grip when the rear part of the small-sized vehicle V is lifted up and, moreover, when it is transported by a vehicle, it can be used as a latching part for a retaining tool for retaining the small-sized vehicle V on a load-carrying tray.

Referring again to FIG. 1 to FIG. 3, detachably secured to the left and right support posts 17 and 17 via bolts (not illustrated) are the front side covers 90 and 90, which cover left and right opposite sides of these support posts, the front cover 91, which covers front faces of the support posts 17 and 17 and the steering column 28 and provides a connection between the two front side covers 90 and 90, and the leg shield 7, which covers rear faces of the support posts 17 and 17 and the steering column 28 and provides a connection between the two front side covers 90 and 90. In this way, the leg shield 7 is disposed so as to project laterally outward from the steering column 28 and cover from the front both legs of the driver D seated on the seat 6. The width of the leg shield 7 is set as for the floor panel 13 so that the width is less than the distance between inner edges of the left and right movable fenders 35 and 35 so as not to intimidate a pedestrian walking past on a sidewalk, an auxiliary cover 92 is provided integrally so as to be connected to the lower end of the leg shield 7, the auxiliary cover 92 having a broader width than that of the leg shield 7, covering rear parts of the left and right movable fenders 35 and 35 and a section therebetween, and being inclined downward to the rear, and the rear end of the auxiliary cover 92 is joined by bolting to the floor panel 13. Opposite end parts 92a and 92a of the auxiliary cover 92 covering the rear parts of the left and right movable fender 35 are formed in an arc shape that protrudes outward in the radial direction of the movable fender 35 and extends along the outer peripheral face of the movable fender 35. A floor mat 14 is laid down on a top face of the floor panel 13 so as to cover joins in the auxiliary cover 92. The floor panel 13 and the floor mat 14 form a footrest for the driver D, that is, a step floor 15.

Since the auxiliary cover 92 has a broader width than that of the leg shield 7 so as to cover the rear parts of the left and right movable fenders 35 and 35 and a section therebetween and extends between the leg shield 7 and the step floor 15, muddy water, etc. leaking past the movable fenders 35 and 35 and splashing rearward can be caught by the auxiliary cover 92.

Moreover, since the auxiliary cover 92 is provided so as to be connected to the lower part of the leg shield 7, even if the width thereof is broader than that of the leg shield 7, a pedestrian is not intimidated.

Furthermore, since the opposite end parts 92a and 92a of the auxiliary cover 92, which cover the rear part off the left and right movable fenders 35, are formed in an arc shape that protrudes outward in the radial direction of the movable fenders 35 and extends along the outer peripheral face of the movable fenders 35, it is possible to ensure that there is a sufficient gap between the movable fenders 35 and 35 and the auxiliary cover 92, thus avoiding interference between the movable fenders 35 and 35 and the auxiliary cover 92 when turning the front wheels 2f and 2f.

Moreover, since the auxiliary cover 92 is disposed between the leg shield 7 and the step floor 15, its width is broader than that of the leg shield 7, and it is inclined downward to the rear, this auxiliary cover 92 can also be used as an auxiliary step for the feet of the driver D to be put on in an extended state, thus contributing to an improvement in comfort.

A pair of left and right headlights 93 and 93 are mounted on a lower part of the front cover 91, and front direction indicators 94 and 94 are mounted on upper parts of the left and right front side covers 90 and 90. Furthermore, a rear cover 95 covering the power unit 5 and the left and right rear wheels 2r and 2r is secured to a rear part of the main frame 10, and tail lights 96 are mounted on a rear face of the rear cover 95.

The driver's seat 6 is formed from a seat cushion 6a supported on the seat rail 16 and a seat back 6b rising from a rear end part of the seat cushion 6a. The seat back 6b integrally includes support plates 97 and 97 on left and right opposite side faces, and a pair of left and right arm rests 98 and 98 are axially supported on the support plates 97 and 97 so that they can pivot between a horizontal working position and an upright retracted position. Rear direction indicators 95 and 95 are mounted on upper parts of the support plates 97 and 97 above these arm rests 98 and 98.

Furthermore, as clearly shown in FIG. 1, an L-shaped rear side cover 100 is mounted on the frame intermediate portion 10b and the frame rear portion 10c of the main frame 10 so as to cover them. The rear side cover 100, the front side cover 90, and the support plate 97 are representative of flat side faces of the vehicle body of the small-sized vehicle V, and a reflector 101 or a luminous body is attached over substantially the whole region of outer faces thereof. The reflector 101 suitably employs a metallic coating, a nearly neutral gray coating, a mirror, etc.; when a metallic coating, in particular a silver metallic coating, is employed, the reflector 101 can simply be formed by coating and, moreover, since the reflectance for illuminating, light is relatively high, visibility is good.

Furthermore, the luminous body suitably employs a light-storing material or a fluorescent material, and when this is employed, since it actively emits light upon reception of illuminating light such as from the headlights of another vehicle, etc., the visibility is therefore high.

Moreover, a reflector 102 or a luminous body of the same type as above, is attached to outside faces of the front wheels 2f and 2f and the rear wheels 2r and 2r.

While the small-sized vehicle V is crossing a roadway at night, when the side face of the vehicle body is illuminated by the headlights of another vehicle, due to light reflected from the reflectors 109 and 102 or light emitted by the luminous body, the rear side cover 100, the front side cover 90, the support plate 97, the front wheel 2f, and the rear wheel 2r stand out, thus making it easy for the driver of the other vehicle to recognize substantially the entire small-sized vehicle V and thereby enabling good side visibility of the small-sized vehicle V at night to be obtained.

The present invention is not limited to the embodiment above, and may be modified in a variety of ways as long as the modifications do not depart from the scope of the present invention as defined by the appended claims. For example, the rear wheel 2r may be a single wheel, thus forming the small-sized vehicle V as a tricycle.

## Claims

1. A small-sized vehicle comprising a body frame (1), a pair of left and right front wheels (2f, 2f) turnably suspended on a front part of the body frame (1), a steering column (28) mounted on the body frame (1) between the front wheels (2f, 2f), handlebars (3) steerably supported on the steering column (28), a steering mechanism (4) coupling the handlebars (3) to the two front wheels (2f, 2f), a driver's seat (6) supported on the body frame (1) to the rear of the steering column (28), and a vehicle body cover (90, 91) supported on the body frame (1) so as to cover at least the area around the steering column (28),
**characterized in that** a guard member (32), having a grip portion (32g) for lifting a vehicle body at a position above each front wheel (2f), is disposed between the vehicle body cover (90, 91) and each front wheel (2f).

2. The small-sized vehicle according to Claim 1,
wherein a movable fender (35) is disposed beneath the grip portion (32g) of each guard member (32), the movable fender (35) covering an upper part of the outer peripheral face of the front wheel (2f) and being capable of turning integrally with the front wheel (2f).

3. The small-sized vehicle according to Claim 2,
wherein the movable fender (35) corresponding to each front wheel (2f) is mounted on a knuckle (26) that turnably supports the front wheel (2f) and that is connected to a forward end part of a tie rod (31) of the steering mechanism (4).

4. The small-sized vehicle according to any one of Claims 1 to 3,
wherein each of the guard members (32) is formed by the grip portion (32g) and a pair of leg portions (32a, 32b) extending from opposite ends of the grip portion (32g), forward end parts of the leg portions (32a, 32b) being secured to the body frame (1).

## Patentansprüche

1. Kleines Fahrzeug, umfassend:
- einen Körperrahmen (1),
- ein Paar von linken und rechten Vorderrädern (2f, 2f), welche schwenkbar an einem Vorderteil des Körperrahmens (1) aufgehängt sind,
- eine Lenksäule (28), welche an dem Körperrahmen (1) zwischen den Vorderrädern (2f, 2f) angebracht ist,
- Lenkstangen (3), welche lenkbar an der Lenksäule (28) gelagert sind,
- einen Lenkmechanismus (4), welcher die Lenkstangen (3) mit den beiden Vorderrädern (2f, 2f) koppelt,
- einen Fahrersitz (6), welcher an dem Körperrahmen (1) hinter der Lenksäule (28) gelagert ist, und
- eine Fahrzeugkörperabdeckung (90, 91), welche an dem Fahrzeugkörper (1) gelagert ist, um wenigstens den Bereich um die Lenksäule (28) herum abzudecken,
**dadurch gekennzeichnet, dass** ein Schutzelement (32), welches an einer Position über jedem Vorderrad (2f) einen Griffabschnitt (32g) zum Anheben eines Fahrzeugkörpers aufweist, zwischen der Fahrzeugkörperabdeckung (90, 91) und jedem Vorderrad (2f) angeordnet ist.

2. Kleines Fahrzeug nach Anspruch 1,
wobei ein beweglicher Kotflügel (35) unter dem Griffabschnitt (32g) von jedem Schutzelement (32) angeordnet ist, wobei der bewegliche Kotflügel (35) einen oberen Teil der äußeren Umfangsfläche des Vorderrades (2f) abdeckt, und in der Lage ist, gemeinsam mit dem Vorderrad (2f) zu schwenken.

3. Kleines Fahrzeug nach Anspruch 2,
wobei der jedem Vorderrad (2f) zugehörige, bewegliche Kotflügel (35), auf einem Achsschwenkgelenk (26) angebracht ist, welches schwenkbar das Vorderrad (2f) lagert, und welches mit einem vorderen Endteil einer Zugstange (31) des Lenkmechanismus (4) verbunden ist.

4. Kleines Fahrzeug nach einem der Ansprüche 1 bis 3,
wobei jedes der Schutzelemente (32) von einem Griffabschnitt (32g) und einem Paar von Beinabschnitten (32a, 32b) gebildet ist, welche sich von entgegengesetzten Enden des Griffabschnitts (32g) erstrecken, wobei vordere Endteile der Beinabschnitte (32a, 32b) an dem Körperrahmen (1) gesichert sind.

## Revendications

1. Véhicule de petites dimensions comprenant une ossature de caisse (1), une paire de roues avant gauche et droite (2f, 2f) en suspension de manière rotative sur une partie avant de l'ossature de caisse (1), une colonne de direction (28) montée sur l'ossature de caisse (1) entre les roues avant (2f, 2f), des guidons (3) supportés de manière dirigeable sur la colonne de direction (28), un mécanisme de direction (4) couplant les guidons (3) aux deux roues avant (2f, 2f), un siège de conducteur (6) supporté sur l'ossature de caisse (1) à l'arrière de la colonne de direction (28) et un couvercle de caisse de véhicule (90, 91) supporté sur l'ossature de caisse (1) afin de recouvrir au moins la zone située autour de la colonne de direction (28),
**caractérisé en ce qu'**un élément de protection (32) ayant une partie de préhension (32g) pour soulever une caisse de véhicule dans une position au-dessus de chaque roue avant (2f) est disposé entre le couvercle de caisse de véhicule (90, 91) et chaque roue avant (2f).

2. Véhicule de petites dimensions selon la revendication 1, dans lequel un garde-boue mobile (35) est disposé au-dessous de la partie de préhension (32g) de chaque élément de protection (32), le garde-boue mobile (35) recouvrant une partie supérieure de la face périphérique externe de la roue avant (2f) et pouvant tourner de manière solidaire avec la roue avant (2f).

3. Véhicule de petites dimensions selon la revendication 2, dans lequel le garde-boue mobile (35) correspondant à chaque roue avant (2f) est monté sur une fourche (26) qui supporte en rotation la roue avant (2f) et qui est raccordé à une partie d'extrémité avant d'une biellette de direction (31) du mécanisme de direction (4).

4. Véhicule de petites dimensions selon l'une quelconque des revendications 1 à 3, dans lequel chacun des éléments de protection (32) est formé par la partie de préhension (32g) et une paire de parties de patte (32a, 32b) s'étendant à partir des extrémités opposées de la partie de préhension (32g), les parties d'extrémité avant des parties de patte (32a, 32b) étant fixées à l'ossature de caisse (1).
